# EUROPEAN PATENT APPLICATION

(11) **EP 3 373 025 A1**
(43) Date of publication of application: **12.09.2018**
(21) Application number: 16861959.1
(22) Date of filing: 24.10.2016
(51) Int. Cl.: G01S 5/02

(54) **SYSTEM FOR CREATING RADIO WAVE STATE MAP AND CONTROL METHOD THEREOF**

(30) Priority: 06.11.2015 JP 2015218813
(71) Applicant: Recruit Holdings Co., Ltd., Tokyo 104-0061 (JP)
(72) Inventor: OKUBO, Kazunori, Tokyo 100-6640 (JP); MAEZAWA, Ryuichiro, Tokyo 100-6640 (JP); ARAKAWA, Hironori, Tokyo 100-6640 (JP)
(74) Representative: EIP
(86) International application number: PCT/JP2016/081472
(87) International publication number: WO 2017/077896

(57) **Abstract**

The state of radio waves emitted from a Wifi apparatus can be detected with precision and the detection result can be mapped. A radio wave state map creating system 1000 is configured by including a mobile terminal 10 having a Wifi function and a GPS (global positioning system) function, a Wifi radio wave detection terminal 100 that is set so as to be associated with a facility such as a restaurant or a bar, a management apparatus 200 that is set in a place separately from the Wifi radio wave detection terminal 100, and an information processing apparatus 300 that, in response to a request from the mobile terminal 10, generates map creation data necessary for creation of a radio wave state map and sends the map creation data as a reply to the mobile terminal 10.

## Description

### Cross Reference to Related Application

The present application is based on Japanese Patent Application No. 2015-218813 filed on November 6, 2015, and the disclosure thereof is incorporated herein.

### Technical Field

The present invention relates to a technology for mapping a radio wave state in a predetermined area.

### Background Art

With the spread of Wifi (wireless fidelity) apparatuses, research on the flow (people flow) of people who visit a shop or a cafe by use of radio waves emitted from Wifi apparatuses and development of a technology for estimating positions have been promoted (see Patent Literature 1).

### Citation List

### Patent Literature

Patent Literature 1: Japanese Patent Laid-Open No. 2012-145586

### Summary of Invention

However, there have been pointed out the problem of, when the number of customers (visiting customers) who are actually visiting a store is to be estimated, mistakenly counting a person just passing by the store as one of the visiting customers because radio waves emitted from Wifi apparatuses are radiated over a wide range, and the problem of causing a large estimation error in measurement of a people flow, etc. because radio waves do not reach some places inside a building due to many walls and objects which reflect radio waves.

The present disclosure has been made in view of the aforementioned circumstances, and one object of the present disclosure is to provide a technology of being able to quickly and accurately report the state of radio waves emitted from Wifi apparatuses by precise detection of the state of radio waves emitted from Wifi apparatuses and by mapping of the detection result.

A radio wave state map creating system according to one aspect of the present disclosure is a system for creating a map indicating a radio wave state, comprising:
storage unit for storing radio wave intensity information indicating a radio wave intensity of a mobile terminal and positional information indicating a position of the mobile terminal at a concerning time point in association with each other, the radio wave intensity information and the positional information being transmitted from the mobile terminal;
generation unit for, in response to a map creation data generation request transmitted from the mobile terminal, acquiring the radio wave intensity information and the corresponding positional information of the mobile terminal from the storage means, and generating map creation data; and
transmission unit for transmitting the generated map creation data to the mobile terminal.

In another aspect of the aforementioned configuration, the storage means may store the radio wave intensity information about the mobile terminal in at least a specific time period and the corresponding positional information, and the generation means may generate, by searching the storage means, the map creation data in accordance with the radio wave intensity information about the mobile terminal in the specific time period and the corresponding positional information.

In yet another aspect of the aforementioned configuration, interpolation processing unit for executing an interpolation processing on the map creation data in response to a request from the mobile terminal may be further provided, and the transmission means may transmit the interpolated map creation data to the mobile terminal.

### Advantageous Effects of Invention

According to the aforementioned configuration, the state of radio waves emitted from Wifi apparatuses are detected with precision, and the detection result is mapped, so that the state of radio waves emitted from Wifi apparatuses can be quickly and accurately informed.

### Brief Description of Drawings

[Figure 1] Figure 1 is a diagram illustrating the schematic configuration of a radio wave state map creating system according to the present embodiment.
[Figure 2] Figure 2 is a block diagram illustrating the functional configuration of a Wifi radio wave detection terminal.
[Figure 3] Figure 3 is a diagram showing one example of the contents of probe information.
[Figure 4] Figure 4 is a block diagram illustrating the configuration of a management server.
[Figure 5] Figure 5 is a block diagram illustrating the configuration of an information processing apparatus.
[Figure 6] Figure 6 is a flowchart showing an operation procedure of the Wifi radio wave detection terminal.
[Figure 7] Figure 7 is a flowchart showing an operation procedure of the management server.
[Figure 8] Figure 8 is a sequence diagram showing a procedure of creating a radio wave state map.
[Figure 9] Figure 9 is a diagram showing an example of a display screen of a mobile terminal in processing of creating a radio wave state map.
[Figure 10] Figure 10 is a diagram showing an example of the display screen of the mobile terminal in processing of creating the radio wave state map.
[Figure 11] Figure 11 is a diagram showing an example of the display screen of the mobile terminal in processing of creating the radio wave state map.

### Description of Embodiments

### A. Present embodiment

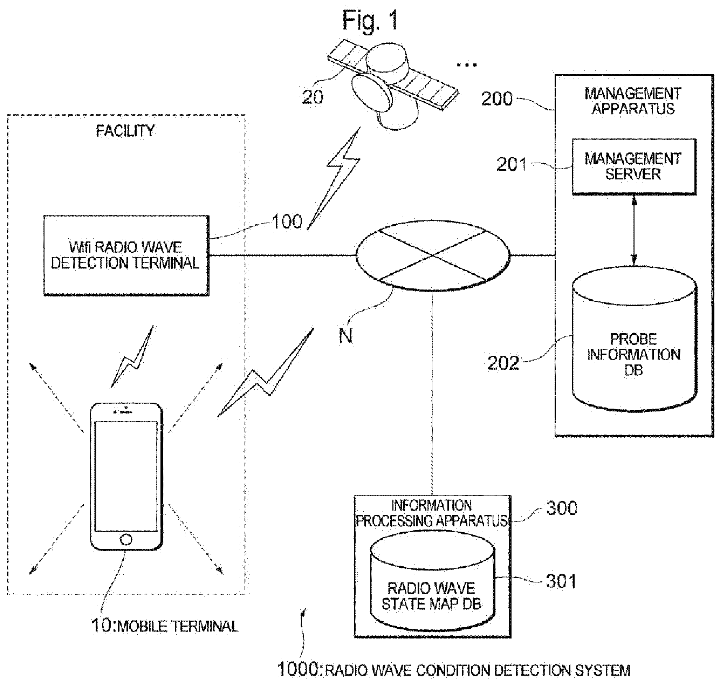

Figure 1 is a diagram illustrating the schematic configuration of a radio wave state map creating system 1000 according to the present embodiment. As illustrated in Figure 1, the radio wave state map creating system 1000 is configured to include a mobile terminal 10 having a Wifi function and a GPS (global positioning system) function, a Wifi radio wave detection terminal 100 which is set in association with a facility such as a restaurant or a bar, a management apparatus 200 which is set at a place separated from the Wifi radio wave detection terminal 100, and an information processing apparatus 300 which, in response to a request from the mobile terminal 10, creates map creation data necessary for creation of a radio wave state map, and sends the map creation data as a reply to the mobile terminal 10. The Wifi radio wave detection terminal 100, the management apparatus 200, and the information processing apparatus 300 can communicate with one another over a communication network N. As examples of the facility, a restaurant and a bar have been given above. However, application to any outdoor/indoor facility such as an amusement composite system, a shopping mall, a shop in a department store, a hospital, an arena, and a park, is possible.

The Wifi radio wave detection terminal 100 is set in a facility such as an eating place as described above, and detects the intensity of radio waves from the mobile terminal 10 which exists in the vicinity of the facility. The Wifi radio wave detection terminal 100 is configured to include a compact PC (personal computer), a Wifi module, a power supply, an external storage apparatus (an SD card or a USB memory), and the like.

The management apparatus 200 manages probe information (the detailed description of which is given later) which is detected by the Wifi radio wave detection terminal 100 and which includes radio wave intensity information about the mobile terminal 10. The management apparatus 200 is configured to include a management server 201 and a probe information database (DB) 202. The management apparatus 200 is formed of a computer having a high computation capability, for example, and is configured by a predetermined server program being executed in the computer.

The communication network N includes a communication network over which information communication among the mobile terminal 10, the Wifi radio wave detection terminal 100, the management apparatus 200, and the information processing apparatus 300 can be carried out. The communication network N may be the internet, a LAN, a dedicated line, a telephone line, an intracompany network, a mobile body communication network, Bluetooth, Wifi, any other communication line, a combination thereof, or the like. The communication network N may be wired or wireless.

The information processing apparatus 300 can receive various types of information and display the contents of the information, and can transmit, to the outside, information inputted by a user through an operation unit. Also, in response to a request from the mobile terminal 10, the information processing apparatus 300 refers to a radio wave state map database (DB) 301, generates map creation data which includes radio wave intensity information and positional information about a specific time period, and sends the map creation data as a reply to the mobile terminal 10 (the detailed description of which is given later). As the information processing apparatus 300, a common personal computer or a mobile-type terminal such as a smartphone or a tablet computer may be used. Here, as one example, a smartphone having predetermined application software (so-called "app") installed therein is assumed as the information processing apparatus 300.

The mobile terminal 10 is carried by a researcher who researches the Wifi radio wave state in the facility, for example. The mobile terminal 10 has a Wifi function for carrying out wireless communication via an access point (not illustrated), etc. and a GPS function for acquiring positional information. Specifically, the mobile terminal 10 is equipped with a GPS module, and can receive radio waves from a GPS satellite 20 so as to acquire the positional information about the terminal in real time. However, a method for acquiring the positional information is not limited to the GPS. The positional information may be acquired by another method. In the present embodiment, a smartphone is assumed as the mobile terminal 10. However, any terminal having a Wifi function and a GPS function can be adopted, examples of which include a mobile phone, a PHS, a personal computer (PC), a laptop computer, a portable information terminal (PDA), and a home game machine. Note that a case where a researcher carries the mobile terminal 10 is assumed in the present embodiment for convenience of explanation. However, the present embodiment is not intended to be limited to this case. The present embodiment may be applied to the mobile terminal 10 of any user (e.g., a user having nothing to do with the facility) who can use the present system.

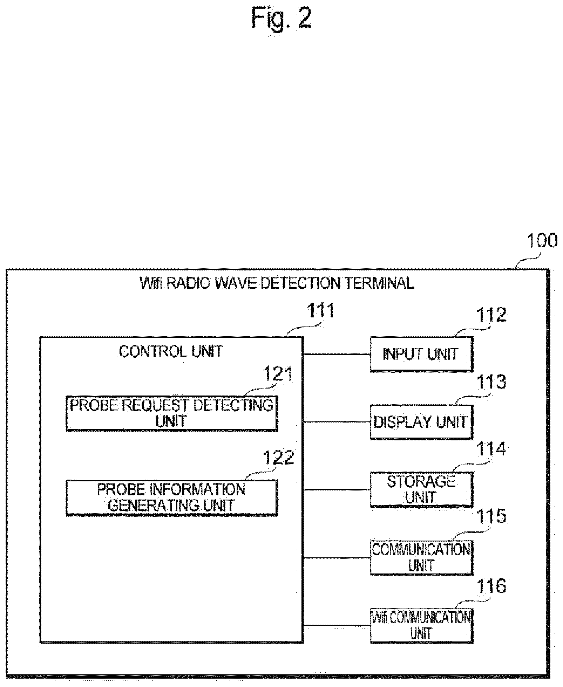

Figure 2 is a block diagram illustrating the functional configuration of the Wifi radio wave detection terminal 100. As illustrated in Figure 2, the Wifi radio wave detection terminal 100 includes a control unit 111, an input unit 112, a display unit 113, a storage unit 114, a communication unit 115, and a Wifi communication unit 116.

The control unit 111 is configured by a predetermined operation program being executed in a computer system including a CPU, a ROM, a RAM, and the like, for example. The control unit 111 includes, as functional blocks, a probe request detection unit 121 and a probe information generation unit 122.

The input unit 112 is input means connected with the control unit 111, for example, and is used for input of various types of information. The display unit 113 is display means such as a liquid crystal display panel connected with the control unit 111, for example, and displays various image displays. The storage unit 114 is storage means such as a hard disk apparatus connected with the control unit 111, and stores various data or an operation program to be executed by the control unit 111.

The communication unit 115 is connected with the control unit 111, and performs a processing related to information communication with the management apparatus 200. The Wifi communication unit 116 performs a processing related to information communication with the mobile terminal 10.

The probe request detection unit 121 detects one of probe requests which are periodically broadcasted (simultaneously sent) from each of the mobile terminals 10 in order to search for an access point. Such a probe request is received via the Wifi communication unit 116.

The probe information generation unit 122 generates probe information including terminal address information for identifying the mobile terminal 10 from which a probe request is detected. The generated probe information is sent to the management apparatus 200 via the communication unit 115.

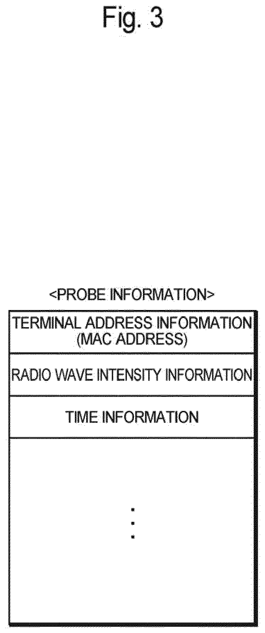

Figure 3 is a diagram showing one example of the contents of the probe information. As shown in Figure 3, the probe information includes "terminal address information (a MAC address)" which is for identifying the mobile terminal 10 detected by the Wifi radio wave detection terminal 100, "radio wave intensity information" which indicates the intensity of radio waves emitted from the mobile terminal 10, and "time information" which indicates a time at which a probe request from the mobile terminal 10 is detected.

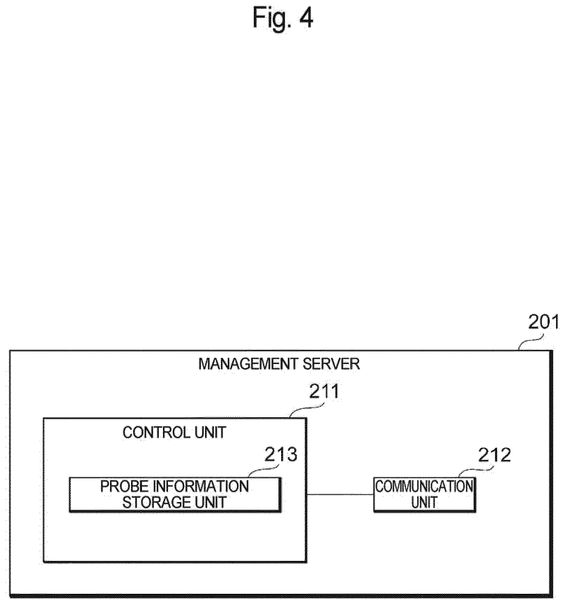

Figure 4 is a block diagram illustrating the configuration of the management server 201 included in the management apparatus 200. The management server 201 manages the probe information sent from the Wifi radio wave detection terminal 100, and includes a control unit 211, a communication unit 212, an input unit and a display unit (not illustrated), and the like.

The control unit 211 is configured by a predetermined operation program being executed in a computer system including a CPU, a ROM, a RAM, and the like, and includes a probe information storage unit 213 as a functional block. The communication unit 212 is connected with the control unit 211, and performs a processing related to information communication with the Wifi radio wave detection terminal 100.

The probe information storage unit 213 performs a processing of storing, in the probe information DB 202 (see Figure 1), the probe information transmitted from the Wifi radio wave detection terminal 100 and received via the communication unit 212.

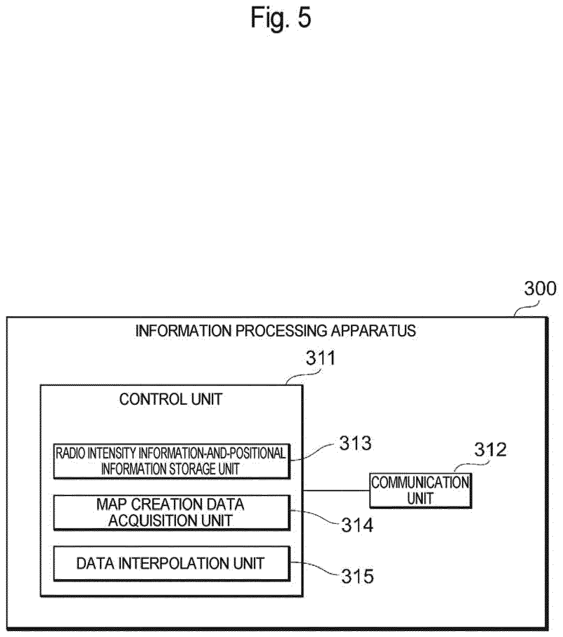

Figure 5 is a block diagram illustrating the configuration of the information processing apparatus 300. The information processing apparatus 300 searches the radio wave state map DB 301 in response to a request from the mobile terminal 10, acquires map creation data including radio wave intensity information and positional information about the mobile terminal 10 in a specific time period, and sends the map creation data as a reply to the mobile terminal 10. The information processing apparatus 300 is configured to include a control unit 311, a communication unit 312, an input unit and a display unit (not illustrated), and the like.

The control unit 311 is configured by a predetermined operation program being executed in a computer system including a CPU, a ROM, a RAM, and the like, and includes, as functional blocks, a radio wave intensity information-and-positional information storage unit 313, a map creation data acquisition unit 314, and a data interpolation execution unit 315. The communication unit 312 is connected with the control unit 311, and performs a processing related to information communication with the information processing apparatus 300.

The radio wave intensity information-and-positional information storage unit 313 stores, in the radio wave state map DB 301, the radio wave intensity information and the positional information transmitted from the mobile terminal 10. Each time the radio wave intensity information is updated, the radio wave intensity information and the associated positional information are transmitted from the mobile terminal 10. More specifically, when the radio wave intensity information of the mobile terminal 10 is updated, the mobile terminal 10 receives the updated radio wave intensity information from the management apparatus 200 and acquires, by using the GPS satellite 20 and a GPS module mounted in the mobile terminal 10, the positional information at the time of updating of the probe information. The mobile terminal 10 stores therein the updated radio wave intensity information and the positional information in association with each other, and transmits the updated information to the information processing apparatus 300.

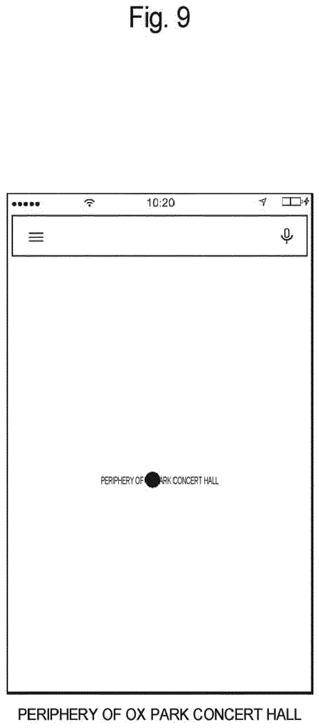

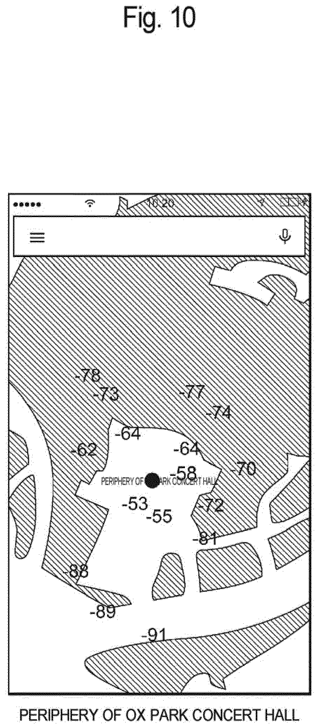

In response to an acquisition request (a request), for map creation data necessary for creation of a radio wave state map, from the mobile terminal 10, the map creation data acquisition unit 314 searches the radio wave state map DB 301, and acquires map creation data that includes radio wave intensity information and positional information about the mobile terminal 10 as the request source, in a specific time period. The map creation data acquisition unit 314 sends the acquired map creation data to the mobile terminal 10. As a result, a display screen on which a radio wave state map has not been created as shown in Figure 9 is switched to a display screen on which the radio wave state map indicating the relationship between the radio wave intensity and the position of the mobile terminal 10 is displayed as shown in Figure 10, for example. Note that, in each of Figures 9 and 10, a circle mark represents the position of the Wifi radio wave detection terminal 100 and numerical values represent the respective radio wave intensities of the mobile terminal 10 at positions.

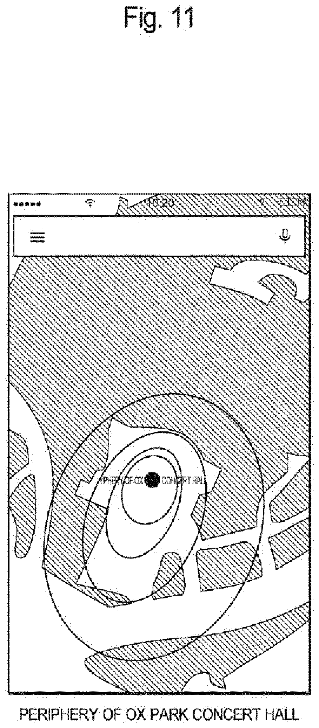

In response to a data interpolation request (a request) from the mobile terminal 10, the data interpolation execution unit 315 executes data interpolation (spline interpolation, etc.) and transmits, to the mobile terminal 10, the interpolated data for creating a radio wave state map (i.e., interpolated map creation data). As a result, the display screen displays a radio wave state map indicating the relationship between the position of the mobile terminal 10 and the radio wave intensity with use of contour lines as shown in Figure 11, for example.

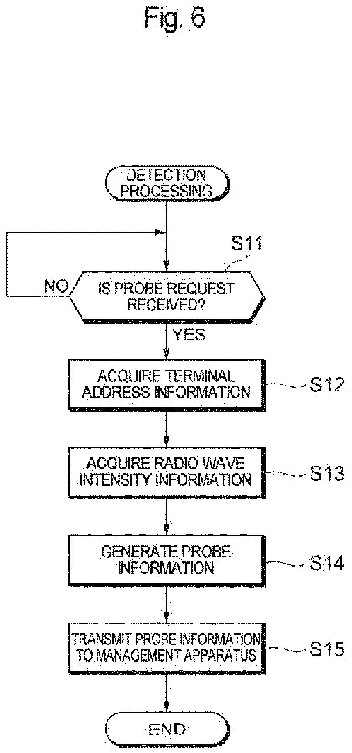

Figure 6 is a flowchart showing an operation procedure of the Wifi radio wave detection terminal 100.

The probe request detection unit 121 of the Wifi radio wave detection terminal 100 determines whether or not a probe request from the mobile terminal 10 in the neighborhood thereof has been received by the Wifi communication unit 116 (step S11). The processing at step S11 is repeated until the probe request is received (NO at step S11). Note that the mobile terminal 10 is assumed to periodically broadcast a probe request in order to find an access point to which the mobile terminal 10 can connect.

When the probe request has been received (YES at step S11), the probe request detection unit 121 acquires terminal address information included in the probe request (step S12), and acquires, from the Wifi communication unit 116, radio wave intensity information indicating the intensity of radio waves emitted from the mobile terminal 10 that transmitted the probe request (step S13).

Next, the probe information generation unit 122 generates probe information including "terminal address information" and "radio wave intensity information" about the detected mobile terminal 10, and "time information" indicating the time at which the probe request from the mobile terminal 10 was detected (step S14). The probe information is sent to the management apparatus 200 via the communication unit 115 (step S15).

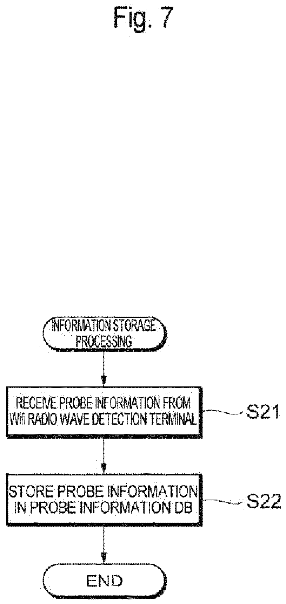

Figure 7 is a flowchart showing an operation procedure of the management server 201.

The probe information storage unit 213 of the management server 201 receives the probe information transmitted from the Wifi radio wave detection terminal 100 via the communication unit 212 (step S21).

Next, the probe information storage unit 213 stores the received probe information in the probe information DB 202 (step S22). The probe information is stored in the probe information DB 202 in time series, for example.

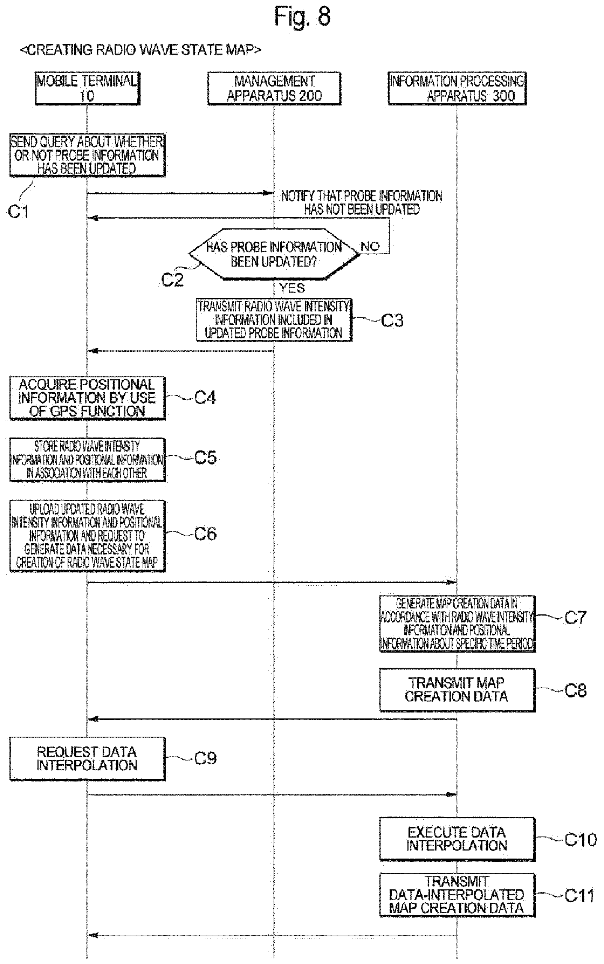

Figure 8 is a sequence diagram showing a method for creating the radio wave state map.

By operating the mobile terminal 10 as appropriate, a researcher who researches the Wifi radio wave state in the facility sends, to the management apparatus 200, a query about whether or not the probe information has been updated (C1). More specifically, the mobile terminal 10 activates predetermined software, etc., installed therein, and sends, at a predetermined time interval (for example, approximately once every 10 seconds), a query to which the own terminal address (MAC address) is added and which is about whether or not the probe information of the mobile terminal 10 registered in the probe information DB 202 has been updated.

The management server 201 of the management apparatus 200 searches the probe information DB 202 by using the terminal address of the mobile terminal 10 as a search key, and thereby, determining whether or not the probe information of the mobile terminal 10 has been updated (C2). When determining the probe information has not been updated (NO at C2), the management server 201 sends the determination result as a reply to the mobile terminal 10. In contrast, when determining that the probe information has been updated (YES at C2), the management server 201 transmits, to the mobile terminal 10, the radio wave intensity information included in the updated updated probe information (C3).

When receiving the updated radio wave intensity information, the mobile terminal 10 acquires positional information by using the GPS satellite 20 and the GPS module installed in the mobile terminal 10 (C4). Subsequently, the mobile terminal 10 stores the updated radio wave intensity information and the positional information in a memory, etc., in association with each other (C5), uploads the updated radio wave intensity information and the positional information to the information processing apparatus 300 (C6), and requests to generate data (map creation data) necessary for creation of a radio wave state map. Note that, when uploading the updated radio wave intensity information and the positional information, the mobile terminal 10 adds the own terminal address (MAC address) thereto.

The information processing apparatus (storage means) 300 stores the uploaded radio wave intensity information and the uploaded positional information in the radio wave state map DB 301. Also, when receiving a generation request for map creation data, the information processing apparatus 300 searches the radio wave state map DB 301 by using the terminal address of the mobile terminal 10 as a search key, and thereby, acquires the radio wave intensity information and the positional information of the mobile terminal 10 in a specific time period. Subsequently, the information processing apparatus (generation means, transmission means) 300 generates map creation data in accordance with the acquired radio wave intensity information and the acquired positional information of the mobile terminal 10 in the specific time period (C7), and transmits the map creation data to the mobile terminal 10 (C8). The mobile terminal 10 develops the received map creation data so that a radio wave state map indicating the relationship between the position of the mobile terminal 10 and the radio wave intensity as shown in Figure 10 can be displayed on the display screen. Thereafter, the researcher sends a data interpolation request to the information processing apparatus 300 by operating the mobile terminal 10, as appropriate (C9). When receiving the data interpolation request, the information processing apparatus (interpolation processing means) 300 applies predetermined data interpolation (spline interpolation, etc.) to the map creation data (C10). Subsequently, the information processing apparatus 300 transmits the interpolated map creation data to the mobile terminal 10 (C11), and ends the processing. The mobile terminal 10 receives and develops the interpolated map creation data such that a radio wave state map indicating radio wave intensity distribution indicated by contour lines can be displayed on the display screen, as shown in Figure 11.

According to the present embodiment, a radio wave state map indicating the state of Wifi radio waves in the vicinity of a facility can be generated with precision in real time by use of the mobile terminal 10 having a Wifi function and a GPS function, as described above. By use of the radio wave state map, whether a user carrying the mobile terminal 10 is inside the facility or outside the facility can be determined with more precision compared to the conventional technology, and further, at which position radio waves can be received with high sensitivity, and the like, can be discerned.

The present invention is not limited to the aforementioned embodiment, and various modifications can be made within the scope of the gist of the present invention. Accordingly, the aforementioned embodiment is merely an example in every respect, and thus, shall not be interpreted in a limited way. For example, a conceivable embodiment is as follows.

In the embodiment having been described above, the management apparatus 200 and the information processing apparatus 300 are separately configured. However, both the apparatuses may be integrally configured. The configuration of one of the apparatuses (e.g., management apparatus 200) may be partially mounted in the other apparatus (e.g., information processing apparatus 300). The configuration can be set and changed, as appropriate, in view of operation of the present system, etc. Further, the program for realizing the embodiment having been described above may be stored in a recording medium. By use of the recording medium, the program can be installed into a computer for managing reservation waiting in a facility. Here, the recording medium having the program stored therein may be a non-transient recording medium. The non-transient recording medium is not limited to a particular medium, and may be a recording medium such as a CD-ROM, for example.

In addition, in the embodiment, Wifi is used as one example of wireless communication standards. However, the present invention is not intended to be limited to the embodiment, and is applicable to an apparatus using another communication standard. Moreover, the present invention is applicable to an apparatus using infrared rays rather than radio waves, for example.

### Reference Signs List

10 mobile terminal
20 GPS satellite
100 Wifi radio wave detection terminal
111 control unit
112 input unit
113 display unit
114 storage unit
115 communication unit
116 Wifi communication unit
121 probe request detection unit
122 probe information generation unit
200 management apparatus
201 management server
202 probe information database
211 control unit
212 communication unit
213 probe information storage unit
300 information processing apparatus
301 radio wave state map database
311 control unit
312 communication unit
313 radio wave intensity information-and-positional information storage unit
314 map creation data acquisition unit
315 data interpolation execution unit
1000 radio wave state map creating system

## Claims

1. A radio wave state map creating system for creating a map indicating a radio wave state, the system comprising a radio wave detection terminal, a management apparatus, and an information processing apparatus, wherein
the radio wave detection terminal includes
probe information generation unit for generating, in accordance with a probe request received from a mobile terminal, probe information including radio wave intensity information indicating a radio wave intensity and including identification information about the mobile terminal, and
transmission unit for transmitting the generated probe information to the management apparatus,
the management apparatus includes
a database that stores the probe information about the mobile terminal transmitted from the radio wave detection terminal,
reception unit for receiving, from the mobile terminal, a query about whether or not the radio wave intensity information included in the probe information has been updated, and
transmission unit for transmitting, when the radio wave intensity information has been updated, the updated radio wave intensity information to the mobile terminal, and
the information processing apparatus includes
storage unit for storing the radio wave intensity information indicating the radio wave intensity of the mobile terminal and positional information indicating the position of the mobile terminal transmitted from the mobile terminal in association with each other,
generation unit for, in response to a creation data generation request for the map, acquiring the radio wave intensity information about the mobile terminal and the corresponding positional information from the storage means, and generating creation data for the map, the creation data generation request being transmitted from the mobile terminal, and
transmission unit for transmitting the generated map creation data to the mobile terminal.

2. A radio wave state map creating system for creating a map indicating a radio wave state, the system comprising a radio wave detection terminal, a management apparatus, and an information processing apparatus, wherein
the radio wave detection terminal includes
probe information generation unit for generating, in accordance with a probe request received from a mobile terminal, probe information including radio wave intensity information indicating a radio wave intensity and identification information about the mobile terminal, and
transmission unit for transmitting the generated probe information to the management apparatus, and
the management apparatus includes
a database that stores the probe information about the mobile terminal transmitted from the radio wave detection terminal,
reception unit for receiving, from the mobile terminal, a query about whether or not the radio wave intensity information included in the probe information has been updated, and
reply sending unit for, in response to the query, determining whether or not the radio wave intensity information has been updated, and sending, when determining that the radio wave intensity information has been updated, the updated radio wave intensity information as a reply to the mobile terminal, and
the information processing apparatus includes
storage unit for storing the radio wave intensity information indicating a radio wave intensity of the mobile terminal and positional information indicating a position of the mobile terminal in association with each other, the radio wave intensity information and the positional information being transmitted from the mobile terminal,
generation unit for, in response to a creation data generation request for the map, acquiring the radio wave intensity information about the mobile terminal and the corresponding positional information from the storage means, and generating creation data for the map, the creation data generation request being transmitted from the mobile terminal, and
transmission unit for transmitting the generated map creation data to the mobile terminal.

3. The radio wave state map creating system according to claim 2, wherein
the storage means stores the radio wave intensity information about the mobile terminal in at least a specific time period and the corresponding positional information, and
the generation means generates, by searching the storage means, the map creation data in accordance with the radio wave intensity information about the mobile terminal in the specific time period and the corresponding positional information.

4. The radio wave state map creating system according to claim 2 or 3, further comprising
interpolation processing unit for executing an interpolation processing on the map creation data in response to a request from the mobile terminal, wherein
the transmission means transmits the interpolated map creation data to the mobile terminal.

5. A radio wave state map creating system for creating a map indicating a radio wave state, the system comprising:
storage unit for storing radio wave intensity information indicating a radio wave intensity of a mobile terminal and positional information indicating a position of the mobile terminal in association with each other, the radio wave intensity information and the positional information being transmitted from the mobile terminal,
generation unit for, in response to a creation data generation request for the map, acquiring the radio wave intensity information about the mobile terminal and the corresponding positional information from the storage means, and generating creation data for the map, the creation data generation request being transmitted from the mobile terminal, and
transmission unit for transmitting the generated map creation data to the mobile terminal.

6. A method for controlling a system which includes a radio wave detection terminal, a management apparatus, and an information processing apparatus and which creates a map indicating a radio wave state, the method comprising:
causing the radio wave detection terminal to perform
a first generation step of generating, in accordance with a probe request received from a mobile terminal, probe information including radio wave intensity information indicating a radio wave intensity and identification information about the mobile terminal, and
a first transmission step of transmitting the generated probe information to the management apparatus;
causing the management apparatus to perform
a first storage step of storing the probe information about the mobile terminal transmitted from the radio wave detection terminal,
a reception step of receiving, from the mobile terminal, a query about whether or not the radio wave intensity information included in the probe information has been updated, and
a reply sending step of, in response to the query, determining whether or not the radio wave intensity information has been updated, and sending, when determining that the radio wave intensity information has been updated, the updated radio wave intensity information as a reply to the mobile terminal; and
causing the information processing apparatus to perform
a second storage step of storing the radio wave intensity information indicating a radio wave intensity of the mobile terminal and the positional information indicating a position of the mobile terminal in association with each other, the radio wave intensity information and the positional information being transmitted from the mobile terminal,
a second generation step of, in response to a creation data generation request for the map, acquiring the radio wave intensity information about the mobile terminal and the corresponding positional information from the storage means, and generating creation data for the map, the creation data generation request being transmitted from the mobile terminal, and
a second transmission step of transmitting the generated map creation data to the mobile terminal.
